(19) Europäisches Patentamt
European Patent Office
Office européen des brevets

(11) EP 1 034 630 B1

(12) # EUROPÄISCHE PATENTSCHRIFT

(45) Veröffentlichungstag und Bekanntmachung des Hinweises auf die Patenterteilung:
**27.02.2002 Patentblatt 2002/09**

(21) Anmeldenummer: **98959760.4**

(22) Anmeldetag: **27.10.1998**

(51) Int Cl.⁷: **H04B 17/00**

(86) Internationale Anmeldenummer:
**PCT/DE98/03145**

(87) Internationale Veröffentlichungsnummer:
**WO 99/30446 (17.06.1999 Gazette 1999/24)**

(54) **VERFAHREN UND MESSANORDNUNG ZUR MESSUNG DER EIGENSCHAFTEN VON FUNKKANÄLEN**

METHOD AND MEASURING DEVICE TO MEASURE THE CHARACTERISTICS OF RADIO CHANNELS

PROCEDE ET DISPOSITIF POUR MESURER LES CARACTERISTIQUES DE VOIES DE RADIOCOMMUNICATION

(84) Benannte Vertragsstaaten:
**DE ES GB**

(30) Priorität: **05.12.1997 DE 19754031**

(43) Veröffentlichungstag der Anmeldung:
**13.09.2000 Patentblatt 2000/37**

(73) Patentinhaber: **SIEMENS AKTIENGESELLSCHAFT
80333 München (DE)**

(72) Erfinder:
- **BRUNNER, Christopher
D-80798 München (DE)**
- **HAARDT, Martin
D-81477 München (DE)**

(56) Entgegenhaltungen:
**DE-A- 19 511 752**

- **HAARDT M ET AL: "Efficient high-resolution 3-D channel sounding" VTC '98. 48TH IEEE VEHICULAR TECHNOLOGY CONFERENCE. PATHWAY TO GLOBAL WIRELESS REVOLUTION (CAT. NO.98CH36151), VTC '98. 48TH IEEE VEHICULAR TECHNOLOGY CONFERENCE. PATHWAY TO A GLOBAL WIRELESS REVOLUTION, OTTAWA, ONT., CANADA, 18-21 MAY 1998, Seiten 164-168 vol.1, XP002097969 ISBN 0-7803-4320-4, 1998, New York, NY, USA, IEEE, USA**
- **HAARDT M ET AL: "3-D unitary ESPRIT for joint 2-D angle and carrier estimation" 1997 IEEE INTERNATIONAL CONFERENCE ON ACOUSTICS, SPEECH, AND SIGNAL PROCESSING (CAT. NO.97CB36052), 1997 IEEE INTERNATIONAL CONFERENCE ON ACOUSTICS, SPEECH, AND SIGNAL PROCESSING, MUNICH, GERMANY, 21-24 APRIL 1997, Seiten 255-258 vol.1, XP002097970 ISBN 0-8186-7919-0, 1997, Los Alamitos, CA, USA, IEEE Comput. Soc. Press, USA**
- **FUHL J ET AL: "HIGH-RESOLUTION 3-D DIRECTION-OF-ARRIVAL DETERMINATION FOR URBAN MOBILE RADIO" IEEE TRANSACTIONS ON ANTENNAS AND PROPAGATION, Bd. 45, Nr. 4, April 1997, Seiten 672-682, XP000686403**
- **HAARDT M ET AL: "2D UNITARY ESPRIT FOR EFFICIENT 2D PARAMETER ESTIMATION" PROCEEDINGS OF THE INTERNATIONAL CONFERENCE ON ACOUSTICS, SPEECH, AND SIGNAL PROCESSING (ICASSP), DETROIT, MAY 9 - 12, 1995 STATISTICAL SIGNAL AND ARRAY PROCESSING, Bd. 3, Nr. CONF. 20, 9. Mai 1995, Seiten 2096-2099, XP002009163 INSTITUTE OF ELECTRICAL AND ELECTRONICS ENGINEERS**
- **ROY R ET AL: "ESPRIT-ESTIMATION OF SIGNAL PARAMETERS VIA ROTATIONAL INVARIANCE TECHNIQUES" IEEE TRANSACTIONS ON ACOUSTICS, SPEECH AND SIGNAL PROCESSING, Bd. 37, Nr. 7, Juli 1989, Seiten 984-995, XP000037318 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 034 630 B1

Printed by Jouve, 75001 PARIS (FR)

## Beschreibung

Die Erfindung bezieht sich auf ein Verfahren zur Messung der Eigenschaften von Funkkanälen, bei welchem die Signale von $M_1$ Empfangssensoren einer Antennengruppe empfangen werden, wobei sich die Empfangssignale je aus Teilwellen eines Sendesignales unterschiedlicher Einfallsrichtung und unterschiedlicher Verzögerung zusammensetzen. Weiters bezieht sich die Erfindung auf eine Meßanordnung zur Messung der Eigenschaften von Funkkanälen, mit einer linearen Antennengruppe, mit einer Anzahl von Antennensensoren, wobei jedem Antennensensor eine Analog-Digital-Abtastung, ein signalangepaßtes Filter sowie eine Stufe zur diskreten Fouriertransformation nachgeordnet ist und zur Realisierung der Empfangsstufen zumindest ein Signalprozessor vorgesehen ist.

Bei einer Vielzahl von Anwendungen, wie bei Sonar, Radar, Satellitenfunk und Mobilfunk besteht der Bedarf nach hochauflösenden Funkkanalmessungen, welche auch eine Richtungsinformation liefern. Ein Mobilfunkkanal repräsentiert die Verbindung zwischen einer Basisstation und Mobilstationen, und eine tiefgreifende Kenntnis der Kanaleigenschaften ist notwendig, um Ausbreitungs- und Kanalmodelle entwickeln und anwenden zu können. Solche Modelle werden von Systemanbietern zur Planung ihrer Netze benötigt und die Ausbreitungsumgebung ist eine wesentliche Grundlage für den Entwurf von Mobilfunksystemen.

Steigende Teilnehmerzahlen und eine begrenzte Anzahl von zur Verfügung stehenden Frequenzen erfordern eine erhöhte spektrale Effizienz. Eine signifikante Verbesserung ergibt sich durch den Einsatz von intelligenten Antennengruppen, wie z.B. in der DE 19 51 1751 A beschrieben. Dabei stützt man sich auf die dem Funkkanal inhärente Raumdiversität. Für den Entwurf und die Verwirklichung von Funksystemen mit intelligenten Antennen werden hochauflösende Messungen an Funkkanälen bezüglich der Richtungsinformation benötigt.

Zur Lösung des angegebenen Problems sind in erster Linie zwei Verfahren zur Kanaluntersuchung bekannt geworden, welche beide die Verzögerung und den Azimuth der an einer Antennenanordnung einlangenden dominanten, also z.B. leistungsstärksten, Wellenfronten schätzen. Beide Verfahren verwenden weiters ein Testsignal, das aus einer mittels einer Pseudozufallssequenz modulierten Impulsfolge besteht.

Aus U. Martin, "Modeling the mobile radio channel by echo estimation", Frequenz, vol. 48, pp. 198-212, 1994 sowie U. Martin, "Echo estimation - Deriving simulation models for the mobile radio channel", in Proc. IEEE Vehicular Techn. Conf., vol. 1, pp. 231-235, Chicago IL, Juli 1995, geht hervor, wie man aus den Ergebnissen von Ausbreitungsmessungen die Parameter gewisser statistischer Kanalmodelle erhalten kann. Der Autor beschreibt eine Meßanordnung, bei welcher Schätzungen der Pfadlaufzeiten mit hoher Auflösung im Frequenzbereich durch Schätzen von überlagerten Exponentialschwingungen erfolgen.

Alternativ kann ein unter dem Begriff ESPRIT bekannt gewordenes Verfahren verwendet werden, wie z.B. das 1-D Unitary ESPRIT Verfahren, welches in der DE 195 11 752 A geoffenbart ist. Wenn man die Empfangsantenne dieser Kanalmeßanordnung durch eine zentrosymmetrische Antennengruppe ersetzt, kann ein zweidimensionales (2-D)-Unitary ESPRIT-Verfahren automatisch Schätzungen sowohl des Einfallswinkels als auch der Laufzeit für dominante Signalpfade liefern. Solche hochauflösende Richtungsmessungen von Funkkanälen erleichtern die Entwicklung realistischer Kanalmodelle, welche die dominanten Einfallsrichtungen an der Basisstation beinhalten. In mehreren Feldmessungen hat sich das 2-D-Unitary ESPRIT-Verfahren in Verbindung mit dieser Kanalmeßanordnung und einer uniformen linearen Antennengruppe bewährt und es liefert automatisch und paarweise Schätzungen des Einfallswinkels und der Laufzeit für die dominanten Pfade, wie in U. Martin, "Charakterisierung und Simulation des richtungsabhängigen Funkkanals", ITG Workshop on Smart Antennas, Zürich, Oktober 1996, vorgestellt.

Das zweite Verfahren zur Kanaluntersuchung, beschrieben in B. Fleury, D. Dahlhaus, R. Heddergott, und M. Tschudin, "Wideband angle of arrival estimation using the SAGE algorithm", in Proc. IEEE ISSSTA, vol. 1, pp. 79-85, Mainz, September 1996, beruht auf dem SAGE (space-alternating generalized expectation maximization) Algorithmus. Mit diesem iterativen Verfahren erhält man eine Schätzung der Parameter nach der größten Wahrscheinlichkeit. Dieses Verfahren erfordert erheblich mehr Rechenaufwand als das oben erwähnte 2-D Unitary ESPRIT-Verfahren, da es auf verschiedenen 1-D-Optimisierungen beruht und einen zusätzlichen Algorithmus, z.B. jenen des 2-D Unitary ESPRIT-Verfahrens zur Lösung seines Anfangswertproblems benötigt. Daher wird das auch für das Verständnis der Erfindung benötigte, auf dem 2-D Unitary ESPRIT-Algorithmus beruhende Kanaluntersuchungsverfahren weiter unten näher erläutert.-

Weiterhin ist aus Richard Roy und Thomas Kailath, "ESPRIT - Estimation of Signal Parameters Via Rotational Invariance Techniques" in IEEE Transactions on Acoustics, Speech and Signal Processing, Vol. 37, No. 7, July 1989, Seiten 984-995, ein Verfahren bekannt, mit dem auch die Einfallsrichtung empfangener Wellenfronten geschätzt werden kann.

Aus Josef Fuhl et al., "High-Resolution 3-D Direction-of-Arrival Determination for Urban Mobile Radio", IEEE Transactions on Antennas and Propagation, Bd. 45, Nr. 4, April 1997, Seiten 672-682 ist ein Verfahren zur Richtungsschätzung von an einem Empfänger einfallenden elektromagnetischen Wellen bekannt, bei nach vorhergehender Bestimmung von Laufzeitverzögerungen der elektromagnetischer Wellen eine zeitgleiche Ermittlung von Azimuth- und Elevationswinkel erfolgt.

Es ist eine Aufgabe der Erfindung, ein Verfahren zu schaffen, welches mit höherer Genauigkeit und geringerem Rechenaufwand - und daher auch rascher - gepaarte Werte von Azimuth und Laufzeitverzögerung der einfallenden Wellenfronten liefert.

Diese Aufgabe wird durch ein Verfahren mit den in Anspruch 1 genannten Merkmalen gelöst. vorgewählte Testsequenz enthält und der Einfallswinkel sowie die Verzögerung der dominanten Wellenfronten gleichzeitig geschätzt werden.

Verglichen mit den bekannten Verfahren läßt sich mit der Erfindung die Genauigkeit merklich erhöhen und der Rechenaufwand senken. Die Erfindung ist besonders zweckmäßig im Mobilfunkbereich einsetzbar, jedoch nicht darauf beschränkt. Ihre Vorteile kommen beispielsweise auch in Sonaranwendungen und in der Radartechnik zur Geltung.

Eine Datenmatrix enthält, wenn Azimuth und Verzögerung geschätzt werden, überlagert für jede Wellenfront eine räumliche und eine zeitliche Invarianz.

Die räumliche Frequenz läßt sich sehr einfach in den Einfallswinkel der Wellenfronten an der Meßstation (Azimuth) und die zugehörige zeitliche Frequenz in die zugehörige Verzögerung an der Meßanordnung umrechnen.

Die Erfindung ermittelt die sich in der Datenmatrix überlagernden räumlichen und zeitlichen Invarianzen jeder dominanten Wellenfront und rechnet sie für jede dominante Wellenfront in entsprechende Winkel und Verzögerungen um. Weiter können auf der Basis der geschätzten zweidimensionalen Parameter die komplexen Amplituden geschätzt werden.

Verbesserte Ergebnisse lassen sich vielfach erhalten, wenn die Testsequenz eine Chip-Signalform aufweist und das gleichzeitige Schätzen unter Berücksichtigung der Chip-Signalform der Testsequenz erfolgt.

Eine vorteilhafte Signalverarbeitung ist gegeben, falls die Signale jedes Antennensensors demoduliert werden und sodann eine Abtastung mit einer Anzahl $M_c$ von Abtastwerten je Chip der Testsequenz erfolgt.

Im Sinne einer einfachen Signalverarbeitung ist es auch zweckmäßig, wenn die sich ergebenden Abtastwerte durch diskrete Fouriertransformation in den Frequenzbereich transformiert werden und/oder die sich ergebenden Werte unter Berücksichtigung des Spektrums der Chip-Signalform korrigiert werden, wobei die aus den erhaltenen Werten für jeden Sensor gebildeten Zeilenvektoren zu einer Datenmatrix $X_{F'}(n)$ zusammensetzbar sind, welche den Kanal charakterisierende Invarianzen enthält.

Bei einer zweckmäßigen Variante der Erfindung ist vorgesehen, daß als Sendesignal eine modulierte Pseudo-Rausch-Sequenz verwendet wird. Die Verwendung einer solchen Pseudo-Rausch-Sequenz ergibt den Vorteil, daß sie einerseits einfach erzeugbar und andererseits leicht auswertbar ist.

Vorzugsweise wird die azimuthale Einfallsrichtung gemessen, da dieser, insbesondere beim Mobilfunk, die größte Bedeutung zukommt.

Eine einfache Signalverarbeitung ergibt sich auch, wenn die Empfangssignale der Empfangssensoren vor dem Demodulieren in das Basisband gemischt werden.

Bei einer empfehlenswerten Variante werden die Abtastsignale signalangepaßt gefiltert, da sich dadurch eine Optimierung des Signal/Rauschverhältnisses ergibt.

Des weiteren ist es zweckmäßig, wenn die empfangenen Signale überabgetastet, d.h. mit einer Abtastfrequenz größer als die doppelte Empfangssignalbandbreite abgetastet werden, da sich hierdurch eine Verbesserung des Signal/Rauschverhältnisses erreichen läßt.

Um den Verarbeitungsaufwand auf ein vernünftiges Maß zu begrenzen, empfiehlt es sich, wenn nach Transformation der Abtastwerte in den Frequenzbereich unter einer vorgebbaren Leistungsgrenze liegende Werte verworfen werden.

Um die zeitliche Invarianzsstruktur zu verbessern, ist es auch von Vorteil, wenn die Abtastwerte nach Transformation in den Frequenzbereich durch Teilung durch das quadratische Spektrum der Chip-Signalform korrigiert werden.

Auch kann es zweckmäßig sein, wenn die Abtastwerte im Raum-Frequenz-Bereich einer Glättung unterworfen werden. Hierdurch wird eine weitere Reduzierung des Rechenaufwands und eine Dekorrelation der Wellenfronten erreicht.

Eine empfehlenswerte Variante zeichnet sich dadurch aus, daß die Ermittlung und Zuordnung der sich überlagernden räumlichen und zeitlichen Invarianzen mit Hilfe eines zweidimensionalen, hochauflösenden Frequenzschätzalgorithmus im Raum-Frequenz-Bereich durchgeführt wird. Durch die gemeinsame Schätzung von Azimuth und Verzögerungszeit der dominanten Wellenfronten ergibt sich eine höhere Schätzgenauigkeit.

Um die Erwartungstreue der Schätzergebnisse zu gewährleisten, ist es ratsam, wenn in dem zweidimensionalen, hochauflösenden Frequenzschätzalgorithmus das farbige Rauschen im Raum-Frequenz-Bereich berücksichtigt wird.

Weiters kann man vorsehen, daß als Frequenzschätzalgorithmus das 2-D Unitary ESPRIT-Verfahren eingesetzt wird, da dieses Verfahren automatisch gepaarte 2-D Parameterschätzwerte und eine hohe Schätzgenauigkeit bei geringem Rechenaufwand liefert.

Zweckmäßig ist es auch, wenn die komplexen Amplituden gemeinsam im Raum-Frequenz-Bereich und/oder

im Raum-Zeit-Bereich geschätzt werden. Die gemeinsame Schätzung im Raum-Frequenz-Bereich hat den Vorteil, daß die Schätzung in der gleichen Domäne erfolgt wie die übrige Parameterschätzung, wogegen die gemeinsame Schätzung im Raum-Zeit-Bereich weniger Rechenaufwand bedeutet und genauere Schätzergebnisse liefert.

Dabei ist es empfehlenswert, wenn die gemeinsame Schätzung nach dem Weighted-Least-Square-Verfahren durchgeführt wird, da diese dem erwartungstreuen Schätzen mit minimaler Varianz entspricht. Hierzu sei auf D.G. Luenberger, Optimization by Vector Space Models, John Wiley and Sons, New York, NY, 1969, S. 82,83 verwiesen.

Die gestellte Aufgabe wird auch durch eine Meßanordnung mit den in Anspruch 19 genannten Merkmalen gelöst.

Die Erfindung ist im folgenden anhand von Ausführungsbeispielen näher erläutert, die auch in der Zeichnung veranschaulicht sind. In dieser zeigt die einzige Figur in schematischer Darstellung den Weg des erfindungsgemäßen Verfahrens, ausgehend von den Einzelsensoren einer linearen Antennengruppe bis zu der das Kanalmodell repräsentierenden Datenmatrix.

Zunächst wird angenommen, daß der Kanal über *P* Impulsfolgen unverändert bleibt. Das Testsignal besteht aus *P* Impulsfolgen, die mittels einer PN (Pseudorausch)Folge (vgl. S.Haykin, Communication Systems, John Wiley & Sons, New York, NY, 3rd Edition, 1994, S. 431-434) moduliert sind und das angeschrieben werden kann als:

$$s(t) = \sum_{i=0}^{P-1} c(t - iT) \quad \text{mit} \quad c(t) = \sum_{m=0}^{N_c-1} d_m p_c(t - mT_c). \tag{1}$$

Weiters ist $N_c$ die Anzahl von Chips in einer PN Folge, gegeben durch $d_m$, $0 \le m \le N_c-1$. In Gleichung (1) bezeichnet $T_c$ die Chipdauer, $T$ die Folgendauer und $p_c(t)$ beschreibt die Chip-Signalform. Beispielsweise läßt sich die sogenannte "Raised-Cosine"-Signalform verwenden, die folgendermaßen definiert ist:

$$p_c(t) = \sqrt{\frac{E_c}{T_c}} \cdot \sin c(2W_n t) \cdot \frac{\cos(2\pi\beta W_n t)}{1 - (4\beta W_n t)^2}, \tag{2}$$

wobei $W_n = \frac{1}{2 \cdot T}$, mit β der Roll-off-Faktor bezeichnet ist und $W = W_n(1+\beta)$ die benötigte Signalbandbreite bezeichnet (vgl. S. Haykin, Communication Systems, John Wiley & Sons, New York, NY, 3rd edition, 1994). $W_n$ bezeichnet die Signalbandbreite eines Nyquist Kanals ($\beta = 0$). Um der Nyquist-Bedingung zu genügen, muß das Abtastintervall kleiner oder gleich $T_c/(1+\beta)$ sein.

Es wird angenommen, daß sich eine sendende Mobileinheit in dem Fernfeld der Antennengruppe befindet, sodaß die einfallenden Wellenfronten im wesentlichen eben sind. Die Schmalbandannahme ist gültig: Wenn die komplexen Einhüllenden der einfallenden Wellenfronten sich während der Ausbreitungszeit entlang der Antennengruppe nur unwesentlich ändern. Das Signalmodell enthält somit die Laufzeit, die Amplitude und die Einfallsrichtung (Azimuth) jeder Wellenfront, die an der Antennengruppe der Meßstation bzw. Basisstation einlangt. Ohne Verlust an Allgemeinheit wird eine uniforme lineare Antennengruppe ULA mit *M* identischen Sensoren an der Meßstation verwendet. An der Anordnung oder Gruppe von M Sensoren fallen *K* schmalbandige ebene Wellenfronten mit der Wellenlänge λ, dem Azimuth $\phi_k$ und der Amplitude $\rho_k$, mit $1 \le k \le K$ ein. Die mit Rauschen behafteten Messungen können dargestellt werden als

$$x(t) = \mathrm{AD_s}\, s(t) + n(t), \tag{3}$$

wobei die komplexwertige $M \times K$ Steuermatrix der Anordnung

$$A = [a_1\ a_2 \cdots a_k \cdots a_K] \in C^{M \times K}$$

aus K Spalten von Steuervektoren $a_k$ besteht. Jeder Steuervektor hängt von dem Azimuth $\phi_k$ der *k*-ten Wellenfront ab:

$$\mathbf{a}_k = \left[ 1 \quad e^{j2\pi\frac{\Delta}{\lambda}\sin(\phi_k)} \quad \ldots \quad e^{j2\pi m\frac{\Delta}{\lambda}\sin(\phi_k)} \quad \ldots \quad e^{j2\pi(M-1)\frac{\Delta}{\lambda}\sin(\phi_k)} \right]^T. \qquad (4)$$

Mit dem Skalar Δ ist der Abstand zwischen den Sensoren bezeichnet und die Hochzahl $^T$ bedeutet die Transponierung. Auf Grund der Mehrwegeausbreitung enthält ***s*(*t*) K** unterschiedlich verzögerte Versionen des Testsignals:

$$\mathrm{s}(t) = \left[ s(t-\tau_1) \quad s(t-\tau_2) \quad \ldots \quad s(t-\tau_k) \quad \ldots \quad s(t-\tau_K) \right]^T. \qquad (5)$$

Hierbei bezeichnet $\tau_k$ die unbekannte Ausbreitungsverzögerung der ***k***-ten Wellenfront. Die $K \times K$ Diagonalmatrix $\mathbf{D}_s$ ist gegeben durch

$$\mathrm{D}_S = diag\left\{ \rho_1, \rho_2, \ldots, \rho_K \right\}, \qquad (6)$$

wobei $\rho_k$ die Abweichung des Ausbreitungspfades $k$ bezeichnet und $\mathbf{n}(\boldsymbol{t}) \in C^M$ additives Rauschen. Die räumliche Kovarianzmatrix des Rauschens ist definiert als

$$\mathrm{R}_{nn,M} = E\left\{ \mathrm{nn}^H \right\} \in C^{M \times M}. \qquad (7)$$

Das an jeder Antenne empfangene Signal wird mit einer Rate $f_s = \frac{M_c}{T_c}$ abgetastet, wobei die Anzahl der Proben je Chip oder der Oversampling-Faktor $M_c$ als ganzzahlig angenommen wird. Mit $X$ ist eine komplexe $M \times N$ Datenmatrix bezeichnet, die aus $N=N_cM_c$ Abtastwerten $x(nT_c/M_c)$, $1 \leq n \leq N$ besteht. Diese Messungen werden bei allen $M$ Sensoren simultan abgetastet.

Das abgetastete Ausgangssignal jeder Antenne gelangt durch ein Filter mit dem Impulsverhalten $h[n]=c[-n]$, wobei $c[n]=c(nT_c/M_c)$. Mit $X_{MF}$ ist die $M \times N$ Matrix bezeichnet, deren $j$-te Reihe $N$ Abtastwerte des Ausganges der $j$-ten Antenne nach dem angepaßten Filter für die ***n***-te Periode enthält. Die Faltung findet in dem Zeitbereich statt und dies entspricht einer Multiplikation mit der $N$-Punkt diskreten Fourier Transformierten von ***h*[*n*]** in dem Frequenzbereich. Siehe hierzu U. Martin, "Modeling the mobile radio channel by echo estimation", Frequenz, vol. 48, pp. 198-212, 1994 sowie U. Martin, H. W. Schüßler and K. Schwarz, "Ein System zur Messung der Eigenschaften von Mobilfunkkanälen und ein Verfahren zur Nachverarbeitung der Meßdaten", Frequenz, vor. 46, pp. 178-188, 1992. Unter Verwendung der Darstellung nach (3) kann $X_{MF}$ ausgedrückt werden als

$$X_{MF} = \mathrm{AD}_s\mathrm{C}, \qquad (8)$$

wobei C eine $K \times N$ Matrix wie folgt ist:

$$C = \begin{bmatrix} r_{cc}(-\tau_1) & r_{cc}(\frac{T_c}{M_c}-\tau_1) & \cdots & r_{cc}((N-1)\frac{T_c}{M_c}-\tau_1) \\ r_{cc}(-\tau_2) & r_{cc}(\frac{T_c}{M_c}-\tau_2) & \cdots & r_{cc}((N-1)\frac{T_c}{M_c}-\tau_2) \\ \vdots & \vdots & \vdots & \vdots \\ r_{cc}(-\tau_K) & r_{cc}(\frac{T_c}{M_c}-\tau_K) & \cdots & r_{cc}((N-1)\frac{T_c}{M_c}-\tau_K) \end{bmatrix} \quad (9)$$

Die Autokorrelationsfunktion der Spreizkurve $c(t)$ in Gleichung (1) ist definiert als

$$r_{cc}(\tau) = c(\tau) * c(-\tau), \quad (10)$$

worin mit * eine Faltung bezeichnet ist. Die Transformation des Raum-Zeit Kanalmodells in ein Raum-Frequenz Kanalmodell wird durch Rechts-Multiplikation von $X_{MF}$ mit der $N \times N$ DFT Matrix W erreicht,

$$X_F = X_{MF} \, W \quad (11)$$

Dies ist auch später in Fig. 1 dargestellt. Falls die Anzahl der Frequenzbins als Potenz von 2 dargestellt wird, können rechnerisch sehr effiziente FFT-Algorithmen zur Berechnung von (11) verwendet werden. Im Rahmen der Erfindung kann eine 2-D Raum-Frequenz-Glättung als Vorverarbeitungsschritt für das 2-D Unitary ESPRIT-Verfahren verwendet werden. Dazu sei verwiesen auf die Dissertation M. Haardt.

Für den Kanal wird eine Zeitinvarianz über $P$ Datenmatrizen $X$ angenommen. Diese können geglättet und zusammengefaßt werden, um eine genauere Ordnungsschätzung für das Modell (Schätzung der Anzahl dominanter Wellenfronten $K$) zu erhalten. Schwache Wellenfronten werden dabei als Rauschen betrachtet. Ordnungsschätzungen für das Modell basieren entweder auf informationstheoretischen Kriterien, wie z.B. in M. Haardt, "Efficient One-, Two-, and Multidimensional High-Resolution Array Signal Processing", Diss., TU München, 1996, ISBN 3-8265-2220-6 (S. 63-66) oder in DE 19 511 151 A, oder auf einem Schwellwertverfahren, z.B. U. Martin, "Ausbreitung in Mobilfunkkanälen: Beiträge zum Entwurf von Meßgeräten und zur Echoschätzung", Dissertation, Universität Erlangen, Deutschland, Oktober 1994 (S.164-180). Die 2-D Invarianzen der resultierenden Matrix $X_F$ werden mittels des 2-D Unitary ESPRIT-Verfahrens geschätzt. Der Endschritt des 2-D Unitary ESPRIT-Verfahrens führt zu Eigenwerten $\lambda_k$ der Form

$$\lambda_k = \tan\left(\frac{\varsigma_k}{2}\right) + j\tan\left(\frac{\mu_k}{2}\right), \quad (12)$$

wobei

$$\varsigma_k = 2\pi\frac{T_k}{T} \quad \text{und} \quad \mu_k = 2\pi\frac{\Delta}{\lambda}\sin(\phi_k) \quad (13)$$

die zeitlichen bzw. räumlichen Frequenzen darstellen. Der Skalar $T=T_cN_c$ bezeichnet die maximale Ausbreitungsverzögerung.

Zur Verbesserung des Kanaluntersuchungsverfahrens, wie es in der zuletzt genannten Literaturstelle beschrieben ist, und das auf einem 2-D Unitary ESPRIT-Verfahren beruht, welches einen wesentlich geringeren Rechenaufwand als das gleichfalls schon erwähnte SAGE-Verfahren verlangt, wird im Gegensatz zu beiden genannten Verfahren bei der Erfindung die Chip-Signalform berücksichtigt. Selbst im Falle einer rechteckförmigen Chip-Signalform, wie dies bei SAGE vorliegt, verbessert diese Modifikation die Funktion merklich, wenn man mehr als einmal je Chip

abtastet. Dazu ist zu bemerken, daß bei einer Abtastung einmal je Chip ($M_C$=1) eine Korrelation mit der PN-Sequenz im Zeitbereich zu einer Spitze führt. Falls jedoch ($M_C$ =2), erzeugt eine Korrelation drei Spitzen, die als drei Wellenfronten mit identischen Einfallsrichtungen, jedoch unterschiedlichen Amplituden und Laufzeiten interpretiert werden. Um diese Mehrdeutigkeit zu vermeiden, und damit ungenaue Schätzungen, muß die Chip-Signalform im allgemeinen in Betracht gezogen werden.

Durch die Verwendung von einander überlappenden Untergruppen für die Raum-Frequenz Glättung wird eine verbesserte Schätzgenauigkeit erreicht. Dies wurde bei dem bisher bekannten 2-D Unitary ESPRIT-Verfahren nicht ausgenutzt. Die Größe der durch Raum-Frequenz Glättung erhaltenen Untergruppen ist durch die Anzahl der verwendeten Frequenzbins und durch die Anzahl der verwendeten Sensoren festgelegt.

Bei dem oben genannten Verfahren von U. Martin, "A directional radio channel model for densely built-up urban area", in Proc. 2nd European Personal Mobile Communications Conference, Bonn, (S.237-244), Sept. 1997, wurde angenommen, daß die Raum-Frequenz-Korrelationsmatrix des additiven Rauschens (einschließlich Interferenz) $\mathbf{R}_{nn}$ gleich der skalierten Identitätsmatrix ist, d.h.

$$R_{nn} = \sigma_n^2 I. \tag{14}$$

Im allgemeinen gilt Gleichung (14) jedoch nicht. Gemäß der Erfindung kann jedoch auch farbiges Rauschen in dem Raum-Frequenz-Bereich behandelt werden. Die Raum-Frequenz-Korrelationsmatrix des zusätzlichen Rauschens wird beispielsweise geschätzt, während der Benutzer nicht aktiv ist, was weiter unten noch erläutert wird. Bei der Erfindung wird der hochauflösende richtungsfindende Algorithmus Unitary ESPRIT entsprechend modifiziert.

Gemäß der Literaturstelle U. Martin, "A Directional Radio Channel Model for Densely Build-up Urban Area" werden die Amplituden in dem Raum-Frequenz-Bereich geschätzt. Die Erfindung ermöglicht die Schätzung in dem Raum-Frequenz-Bereich ebenso wie in dem Raum-Zeit-Bereich. Eine Schätzung in dem Raum-Zeit-Bereich verbessert die Schätzgenauigkeit signifikant.

Verglichen mit den bekannten Verfahren liefert die Erfindung eine höhere Genauigkeit und verringert den Rechenaufwand merklich. Da von der Annahme ausgegangen wird, daß der Kanal für die Messungen seiner Eigenschaften zeitinvariant ist, ist es von Vorteil, wenn man die Meßzeit begrenzen kann. Dies wird dadurch erreicht, daß man die Anzahl von Meßzeitpunkten verringert, ohne daß dadurch eine Verringerung der Leistungsfähigkeit, verglichen mit bekannten Verfahren eintritt. Weiters kann die Zahl der zur Verfügung stehenden Meßzeitpunkte durch Überabtasten erhöht werden, um noch eine höhere Genauigkeit zu erhalten. Es ist anzumerken, daß im allgemeinen ein Überabtasten bei dem Verfahren aus der zuvor genannten Literaturstelle von U. Martin zu einem Modellfehler führt, der durch Berücksichtigung der Chip-Signalform vermieden werden kann.

Nun wird zunächst der für die Ausführung der Erfindung angewendete mathematische Apparat näher erläutert und sodann ein Ablaufbeispiel für das erfindungsgemäße Verfahren.

Eine Meßstation mit einer uniformen linearen Antennengruppe ULA, die aus ***M*** identischen Sensoren (S1 ... SM) besteht, wird installiert und eine mobile Funkeinheit in Betrieb genommen, die ein Prüfsignal, nämlich eine Testsequenz aussendet, welche aus Pulsen besteht, die mittels einer PN-Sequenz mit rechteckförmiger Chip-Signalform moduliert ist. Oben wurde bereits beschrieben, wie man die Matrix $X_F$ erhält, und dies ist in der einzigen Figur der Zeichnung erläutert.

Durch Abtasten erhält man

$$r_{cc}[n] = r_{cc}\left(n\frac{T_c}{M_c}\right).$$

Der $N$ abgetastete Korrelationswerte der Korrelationsfunktion enthaltende Vektor wird in den Frequenzbereich gemäß

$$\mathbf{r}_{DFT} = \mathbf{W}\begin{bmatrix} r_{cc}[0] \\ r_{cc}[1] \\ \vdots \\ r_{cc}[N-1] \end{bmatrix}, \tag{15}$$

transformiert, wobei **W** die $N \times N$ DFT (= Diskrete Fourier Transformation) Matrix ist. Die Chip-Signalform wird durch Modifizierung der Raum-Frequenz-Bereichs-Datenmatrix $X_F$ in (11) wie folgt berücksichtigt:

$$X_{F'} = X_F\left(diag\left(\mathrm{r}_{DFT}\right)\right)^{-1} \qquad (16)$$

Die Koeffizienten in $\mathbf{r}_{DFT}$ können nahe an Null oder gleich Null sein. Wegen der numerischen Instabilität bilden die $N$ Frequenzbins von $X_{F'}$, die mit den Reziprokwerten dieser sehr kleinen Koeffizienten multipliziert werden, nicht Teil der aus $X_{F'}$ extrahierten Submatrizen zum Glätten. Die Glättungsprozedur wird im nächsten Abschnitt erläutert.

Die 2-D Invarianzmatrix $X_{F'}$ kann als ein einziger Meßaugenblick einer (virtuellen) uniformen rechteckigen Gruppe URA der Größe $M \times N$ interpretiert werden. Es ist vorteilhaft, eine Raum-Frequenz Glättung unter Verwendung sich überlappender Untergruppen vorzunehmen.

Als Beispiel sei eine virtuelle uniforme rechteckförmige Gruppe der Dimension $M{\times}N{=}4{\times}5$ angenommen. Ein solches Beispiel ist auch in M. Haardt, "Efficient One- Two-, and Multidimensional High-Resolution Array Signal Processing, Dissertation, Technische Universität München, 1996, ISBN 3-8265-2220-6, angenommen. Es gibt $N$=5 Frequenzbins, welche je $M$=4 Sensoren enthalten, und jede der $L_M$=2 linearen Untergruppen in Raumrichtung besitzt $M_{x,sub}=M-L_M+1=3$ Sensoren. Die Selektionsmatrix entsprechend der $l_M$-ten Untergruppe der uniformen rechteckförmigen Gruppe ist definiert als:

$$\mathrm{J}_{l_M}^{(M)} = \left[0_{M_{x,sub}\times(l_M-1)} \quad \mathrm{I}_{M_{x,sub}} \quad 0_{M_{x,sub}\times(L_M-l_M)}\right], \qquad 1 \le l_M \le L_M. \qquad (17)$$

Entsprechend kann man eine ähnliche Technik für die Frequenzbins verwenden. Dabei werden die N Frequenzbins in $L_N$ Subgruppen unterteilt, von welchen jede $N_{sub} = N- L_N +1$ Bins enthält. Die geeigneten Selektionsmatrizen sind gegeben durch

$$\mathrm{J}_{l_N}^{(N)} = \left[0_{N_{sub}\times(l_N-1)} \quad \mathrm{I}_{N_{sub}} \quad 0_{N_{sub}\times(L_N-l_N)}\right], \qquad 1 \le l_N \le L_N. \qquad (18)$$

Es ist zu beachten, daß die virtuelle Gruppe aus $M \times N$ Elementen in $L=L_M L_N$ virtuelle Untergruppen geteilt wurde, von welchen jede $M_{sub} = M_{x,sub}N_{sub}$ Elemente enthält. Durch Anwendung des $vec\{\cdot\}$-Operators auf die resultierenden $L$ Untergruppen der Form

$$\mathrm{J}_{l_M}^{(M)}\, X_{F'}\, J_{l_N}^{(N)T} \in C^{M_{x,sub}\times N_{sub}},$$

erhält man die Matrix $X_{F'}$ der Dimension $M_{sub} \times L$. Hier bezeichnet $vec$\{A\} eine vektorwertige Funktion, welche eine $m{\times}n$ Matrix A in einen $mn$-dimensionalen Spaltenvektor durch Untereinanderschreiben der Spalten der Matrix abbildet.

Es wird angenommen, daß der Kanal über P geglättete Datenmatrizen $X_{F'}$, zeitinvariant ist. Diese können gemäß

$$X_{sub} = [X_{F}'(1)\; X_{F'}(2) \cdots X_{F'}(i) \cdots X_{F'}(P)] \in C^{M_{sub}\times LP}$$

vereinigt werden, um eine genauere Schätzung der Ordnung des Modells zu erhalten, d.h. die Schätzung der Anzahl der dominanten Wellenfronten $K$. Dabei werden schwache Wellenfronten als Rauschen betrachtet. Man verwendet zweckmäßigerweise das modifizierte MDL-Kriterium (MDL = Maximum Description Length), welches ein Vorwärts-Rückwärts-Mitteln und Glätten berücksichtigt. Dazu wird auf die zuvor genannte Dissertation M. Haardt verwiesen. Im Falle eines Überabtastens sind die statistischen Annahmen, die für das MDL-Kriterium benötigt werden, nicht länger gültig. Diese statistischen Annahmen sind in U. Martin, "Ausbreitung in Mobilfunkkanälen", wie bereits oben erwähnt,

zu finden. Es ist daher empfehlenswert, das MDL-Kriterium getrennt für jede der $M_c$-Abtastungen eines Chips für alle Chips zu verwenden. Die Schätzungen des $M_c$-Ordnungsmodells werden zur Erzielung des wahren Ordnungsmodells gemittelt.

Falls das in Gleichung (3) definierte Rauschen ***n*** weiß ist und die Chip-Signalform rechteckförmig, ist das transformierte Rauschen $n_F$ nur dann weiß, wenn kein Überabtasten stattfindet. Die geglättete Rausch-Kovarianzmatrix in dem Raum-Frequenz-Bereich ist definiert als

$$R_{nn} = E\left\{ n_{F'sub}\, n_{F'sub}^{H} \right\} \in C^{M_{sub} \times M_{sub}} \qquad (19)$$

Für jede positive ganze Zahl $p$ bezeichnet $I_p$ die $p \times p$ Identitätsmatrix und $\Pi_p$ die $p \times p$ Austauschmatrix, die auf ihrer Antidiagonale Einsen und sonst Nullen aufweist.

$$\Pi_p = \begin{bmatrix} & & 1 \\ & 1 & \\ & \cdot & \\ 1 & & \end{bmatrix} \in R^{p \times p}.$$

Eine komplexe Konjugation mit sich selbst wird durch einen Überbalken $\overline{(.)}$ dargestellt. Im folgenden werden Matrizen $Q \in C^{p \times q}$, welche der Bedingung genügen:

$$\Pi_p \overline{Q} = Q \;\Leftrightarrow\; \Pi_p Q = \overline{Q}$$

links Π_reell genannt. Die schwach besetzten, unitären Matrizen

$$Q_{2n} = \frac{1}{\sqrt{2}} \begin{bmatrix} I_n & jI_n \\ \Pi_n & -j\Pi_n \end{bmatrix} \quad \text{und} \quad Q_{2n+1} = \frac{1}{\sqrt{2}} \begin{bmatrix} I_n & 0 & jI_n \\ 0^T & \sqrt{2} & 0^T \\ \Pi_n & 0 & -j\Pi_n \end{bmatrix}, \qquad (20)$$

sind beispielsweise links Π-reell von gerader bzw. ungerader Ordnung.

Mit

$$\hat{R}_{xx} = \frac{1}{LP} X_{sub} X_{sub}^{H} \qquad (21)$$

wird die geschätzte Kovarianzmatrix der rauschbehafteten Messungen bezeichnet. Dabei ist anzumerken, daß man anstelle des in dieser Gleichung verwendeten rechteckförmigen Fensters auch ein gleitendes Fenster zum Berechnen von $R_{xx}$ verwenden kann. Darüber hinaus bezeichnet $R_{nn}$ eine Schätzung der Kovarianzmatrix des additiven Rauschens (19), das auf ähnliche Weise erhalten wird, jedoch ohne Anwesenheit eines Quellsignales. Diese Matrizen werden dann in folgender Weise transformiert:

$$G_{xx} = \mathrm{Re}\left\{ Q_{M_{sub}}^{H} \hat{R}_{xx} Q_{M_{sub}} \right\} \quad \text{und} \quad G_{nn} = \mathrm{Re}\left\{ Q_{M_{sub}}^{H} \hat{R}_{nn} Q_{M_{sub}} \right\}, \qquad (22)$$

wobei $Q_{M_{sub}}$ eine beliebige links Π-reelle Matrix der Größe $M_{sub} \times M_{sub}$ bezeichnet, die gleichfalls unitär ist.

Um ein Paar von Selektionsmatrizen für das 2-D Unitary ESPRIT-Verfahren zu spezifizieren, werden zunächst 1-D-Selektionsmatrizen für die uniformen linearen Gruppen unter Berücksichtigung der räumlichen Invarianz wie folgt definiert.

$$J_1^{(M_{x,sub})} = \left[ I_{M_{x,sub}-1} \quad 0_{(M_{x,sub}-1)\times 1} \right] \quad \text{und} \quad J_2^{(M_{x,sub})} = \left[ 0_{(M_{x,sub}-1)\times 1} \quad I_{M_{x,sub}-1} \right]$$

In ähnlicher Weise werden die 1-D-Selektionsmatrizen für die Frequenzbins, die Frequenzinvarianz berücksichtigend, definiert als:

$$J_1^{(N_{sub})} = \left[ I_{N_{sub}-1} \quad 0_{(N_{sub}-1)\times 1} \right] \quad \text{und} \quad J_2^{(N_{sub})} = \left[ 0_{(N_{sub}-1)\times 1} \quad I_{N_{sub}} - 1 \right].$$

Die 2-D-Selektionsmatrizen der uniformen, rechteckförmigen Gruppe URA (entsprechend einer maximalen Überlappung) werden in folgender Weise als Kronecker-Produkte erhalten.

$$J_{\mu 1} = I_{N_{sub}} \otimes J_1^{(M_{x,sub})} \qquad J_{\mu 2} = I_{N_{sub}} \otimes J_2^{(M_{x,sub})} \tag{23}$$

$$J_{v1} = J_1^{(N_{sub})} \otimes I_{M_{x,sub}} \qquad J_{v2} = J_2^{(N_{sub})} \otimes I_{M_{x,sub}} \tag{24}$$

Sodann sind die Paare von transformierten Selektionsmatrizen gegeben durch:

$$K_{\mu 1} = 2 \cdot \mathrm{Re}\left\{ Q_{m_s}^H \, J_{\mu 2} \, Q_{M_{sub}} \right\} \qquad K_{\mu 2} = 2 \cdot \mathrm{Im}\left\{ Q_{m_s}^H J_{\mu 2} Q_{M_{sub}} \right\} \tag{25}$$

$$K_{v1} = 2 \cdot \mathrm{Re}\left\{ Q_{m_f}^H J_{v2} Q_{M_{sub}} \right\} \qquad K_{v1} = 2 \cdot \mathrm{Im}\left\{ Q_{m_f}^H J_{v2} Q_{M_{sub}} \right\} \tag{26}$$

Für eine virtuelle uniforme rechteckförmige Gruppe von $M_{sub} = M_{x,sub}N_{sub}$ Elementen muß gelten: $m_s = (M_{x,sub} - 1)N_{sub}$ und $m_f = (N_{sub} - 1)M_{x,sub}$, damit man eine maximale Überlappung der Untergruppen in beiden Richtungen erhält.

Eine kurze Zusammenfassung des 2-D Unitary ESPRIT mit farbigem Rauschen und dem Kovarianz-Lösungsansatz ist nachfolgend gegeben.

**1. Signalunterraumschätzung**: Berechne die generalisierte Eigenzerlegung des Matrixpaares $G_{xx}$ und $G_{nn}$, d.h.,

$$G_{xx} E = G_{nn} E \cdot \Sigma \qquad \text{mit} \qquad \Sigma = diag\{\sigma_i\}_{i=1}^{M_{sub}}.$$

Dabei sind die K dominant generalisierten Eigenvektoren des Matrixpaares $G_{xx}$ und $G_{nn}$ in $E_s \in R^{M_{sub} \times K}$ enthalten.

**2. Lösung der Invarianzgleichungen**: Löse

$$\underbrace{\mathrm{K}_{\mu 1}\,\mathrm{G}_{nn}\,\mathrm{E}_s}_{R^{m_s \times K}}\,\mathrm{Y}_\mu \approx \underbrace{\mathrm{K}_{\mu 2}\,\mathrm{G}_{nn}\,\mathrm{E}_s}_{R^{m_s \times K}} \quad \text{und} \quad \underbrace{\mathrm{K}_{\nu 1}\mathrm{G}_{nn}\mathrm{E}_s}_{R^{m_f \times K}}\,\mathrm{Y}\nu \approx \underbrace{\mathrm{K}_{\nu 2}\mathrm{G}_{nn}\mathrm{E}_s}_{R^{m_f \times K}}$$

mit Hilfe von LS, TLS, SLS oder 2-D SLS. (LS = Least Square, TLS = Total Least Square, SLS = Structured Least Square)

**3. Gemeinsame räumliche und zeitliche Frequenzschätzung**: Berechne die Eigenwerte der komplexwertigen $K \times K$ Matrix

$$\mathrm{Y}_\mu + j\mathrm{Y}_\nu = \mathrm{T}\Lambda\mathrm{T}^{-1} \quad \text{mit} \quad \Lambda = diag\{\lambda_k\}_{k=1}^{K}$$

- $\mu_k = 2\arctan(\mathrm{Re}\{\lambda_k\}), \qquad 1 \le k \le K$
- $\nu_k = 2\arctan(\mathrm{Im}\{\lambda_k\}), \qquad 1 \le k \le K$

Mit den geschätzten Winkeln und Verzögerungszeiten $\hat{\phi}_k$ und $\hat{\tau}_k$ in Gleichung (13) können die Amplituden in dem Raum-Zeit- oder in dem Raum-Frequenz-Bereich geschätzt werden.

Zunächst zur Schätzung der Amplituden in dem Raum-Frequenz-Bereich: Der Datenvektor $x_{F'}$ wird erhalten durch

$$\mathrm{x}_{F'} = vec\{X_{F'}\}, \qquad (27)$$

wobei $x_{F'}$ als Ergebnis einer einzelnen Abtastung zur Zeit $t_0$ interpretiert werden kann. Mit einem Datenmodell gemäß:

$$\mathrm{x}_{F'}(t_0) = \mathrm{A}_\nu\,\mathrm{s}_{F'}(t_0) + \mathrm{n}_{F'}(t_0) \qquad (28)$$

wie z.B. in M. Haardt, M. D. Zoltowski, C. P. Mathews, and J. A. Nossek,, "2D Unitary ESPRIT for Efficient 2D Parameter Estimation", in Proc. IEEE Int. Conf. Acoust., Speech, Signal Processing, vol. 3, pp. 2096-2099, Detroit, MI May 1995 verwendet, gibt der absolute Wert des Vektors $s_{F'}$ die Signalleistung an. Die virtuelle 2-D Steuermatrix $\hat{A}_v$ ist durch die zeitlichen Frequenzen $\varsigma_k$ und die räumlichen Frequenzen $\mu_k$ der Gleichung (13) bestimmt, was in der zuvor genannten Literaturstelle beschrieben ist. Es ist zu beachten, daß $\hat{A}_v$ von der 1-D Steuermatrix A gemäß Gleichung (4) verschieden ist und daß weiters das Rauschen $n_{F'}$ nicht weiß ist, wenn man unter Verwendung einer rechteckförmigen Chipsignalform überabtastet. Die invertierbare Rausch-Kovarianzmatrix $R_{nn,F'}$ ist definiert als

$$\mathrm{R}_{nn,F'} = E\{\mathrm{n}_{F'}\,\mathrm{n}_{F'}^{H}\}, \qquad (29)$$

wobei $R_{nn,F'}$ eine $N \times N$ Matrix ist. Im Gegensatz zu $R_{nn}$ in Gleichung (19) ist in der Matrix $R_{nn,F'}$ der Größe $MN \times MN$ ein Raum-Frequenzglätten nicht enthalten. Sodann läßt sich die erwartungstreue lineare Minimumvarianzschätzung (Gauss-Markow-Schätzung) der Amplituden durchführen gemäß:

$$\hat{s}_{F'} = (\hat{A}_V^H \hat{R}_{nn,F'}^{-1} \hat{A}_V)^{-1} \hat{A}_V^H \hat{R}_{nn,F'}^{-1} \cdot x_{F'}. \qquad (30)$$

Nun zu den Schätzungen der Amplituden in dem Raum-Zeit-Bereich: In den meisten Fällen kann eine merklich höhere Genauigkeit erreicht werden, wenn die Modellgleichung (3) in dem Raum-Zeit-Bereich gelöst wird, da die durch eine ungenaue Schätzung der Parameter $\tau_k$ und $\phi_k$ hervorgerufene Verschlechterung nicht so schwerwiegend ist. Wenn die Gruppengeometrie bekannt ist und die Gruppe kalibriert, so ist die 1-D Steuermatrix Â, wie in Gleichung (4) definiert, durch die geschätzten Einfallsrichtungen $\phi_k$ vollständig gegeben. Der Vektor $s_{PN}$ von $\tau_k$ enthalte die abgetasteten und zeitverzögerten PN Sequenzen entsprechend der Verzögerung $\tau_k$. Dann kann Gleichung (3) geschrieben werden als:

$$X = \sum_{k=1}^{K} \rho_k \, a(\phi_k) \, s_{PN}(\tau_k)^T. \qquad (32)$$

Mit $vec\{Y_1 Y_2 Y_3\} = (Y_3^T \otimes Y_1) vec\{Y_2\}$ entwickelt sich die Gleichung (32) zu

$$vec\{X\} = \sum_{k=1}^{K} \rho_k \left[ s_{PN}(\tau_k) \otimes a(\phi_k) \right]. \qquad (33)$$

Der Operator ⊗ bezeichnet das Kronecker Produkt. Falls das Rauschen n nicht weiß ist, muß die Rausch-Kovarianzmatrix in Betracht gezogen werden. In Gegensatz zu Gleichung (7) muß bei der Berechnung der Rauschkovarianzmatrix das Rauschen der vollständigen Sequenz berücksichtigt werden:

$$R_{NN} = E\left\{ vec\{N\} vec\{N\}^H \right\} \in C^{MN \times MN}, \qquad (34)$$

wobei

$$N = \left[ n[1] \quad n[2] \quad \cdots \quad n[N] \right] \in C^{M \times N}.$$

Die Lösung der Gleichung (33) für $\hat{\rho}_T$ führt zu den geschätzten Amplituden $\hat{\rho}_{T,1}$ $\hat{\rho}_{T,2}$, ... $\hat{\rho}_{T,K}$, wobei

$$\hat{\rho}_T = (B^H \hat{R}_{NN}^{-1} B)^{-1} B^H \hat{R}_{NN}^{-1} \cdot vec\{X\}, \qquad (35)$$

mit

$$B = \left[ s_{PN}(\tau_1) \otimes a(\phi_1) \quad s_{PN}(\tau_2) \otimes a(\phi_2) \quad \ldots \quad s_{PN}(\tau_K) \otimes a(\phi_K) \right].$$

Zu der praktischen technischen Realisierung sei zunächst wiederholt, daß in Abhängigkeit von Sende- und Empfangsposition der Funkkanal durch die Anzahl der am Empfänger eintreffenden Wellenfronten *K* sowie deren komplexe Amplituden $\rho_k$, Verzögerungen $\tau_k$ und Ankunftswinkel Azimuth $\phi_k$ charakterisiert werden kann. Dabei sind die folgenden drei Schritte wesentlich:

Erzeugung und Aussendung des Sendesignals *s*(*t*) mit einer Testsequenz, Empfang durch ein eindimensionales Antennenfeld, dann Transformation ins Basisband durch Heruntermischen und weiters Abtastung. Es folgt eine digitale Signalverarbeitung mit einer Vorverarbeitung durch ein signalangepaßtes Filter (= matched filter), eine Transformation in den Raum-Frequenz-Bereich und Berücksichtung der Pulsform mit entsprechenden Korrekturen. Schließlich werden die Parameter geschätzt, nämlich durch gemeinsame Parameterschätzung vorzugsweise mittels eines 2-D Unitary ESPRIT-Verfahrens und einer gemeinsamen Schätzung der komplexen Amplituden.

Im folgenden werden diese Schritte noch näher erläutert.

**Erzeugung des Sendesignals**

Das Sendesignal

$$s'(t) = \sum_{i=0}^{P} c(t - iT) \quad \text{mit} \quad c(t) = \sum_{m=0}^{N_c - 1} d_m p_c(t - mT_c) \qquad (36)$$

besteht aus $P$+1 Pulsfolgen. Jede Pulsfolge $c(t)$ wird durch eine Pseudo-Rausch-Sequenz $d_m$ der Länge $N_c$ moduliert. Die Bandbreite des Pulses richtet sich nach der Bandbreite des auszumessenden Funkkanals. Die Amplituden des Sendesignals

$$s'(t) = s(t) + A \text{ werden um } A \qquad (37)$$

verschoben, um dem geforderten Modell im Raum-Frequenz-Bereich zu entsprechen. Weiterhin wird A so gewählt, daß das Signal/Rauschverhältnis beim Empfang optimiert wird, d.h. es wird ein signalangepaßtes Filter verwendet. Dieses Signal $s'(t)$ wird im Basisband erzeugt, in das auszumessende Hochfrequenzband gemischt und abgestrahlt.

**Empfang und Auswertung des Sendesignals Vorverarbeitung**

Signalangepaßtes Filter

Die Empfangseinrichtung umfaßt ein eindimensionales Antennenfeld ("Antennengruppe") aus $M_1$ Antennen, wobei Unitary ESPRIT ein zentrosymmetrisches Antennenfeld benötigt. Die empfangenen Signale werden in das Basisband heruntergemischt und mit einem ganzzahligen Vielfachen $M_c$ der Grundabtastrate $1/T_c$ abgetastet. Die abgetasteten Signale werden mit einer geeigneten Sequenz korreliert.

Hierdurch ergibt sich ein signalangepaßtes Filter. Wird die geeignete gewählte Pulsform $p_c(t)$ berücksichtigt, siehe unten, so bewirkt jede Wellenfront eine zeitliche Invarianz im Raum-Frequenz-Bereich.

**Berücksichtigung der Pulsform**

Der Ausgang des signalangepaßten Filters $X_{MF}(i) \in \mathbb{C}^{M_1 M_2 \times N_c M_c}$, wird in den Raum-Frequenz-Bereich transformiert,

$$X_F(i) = X_{MF}(i)\mathrm{W}, \qquad (39)$$

wobei $\mathrm{W} \in C^{N_c M_c \times M_2}$ eine Matrix der diskreten Fouriertransformation (DFT) ist. Es werden nur die $M_2$ spektralen Linien berechnet, für die der Betrag der in den Frequenzbereich transformierten Kreuzkorrelationsfunktion der abgetasteten Folgen $c'(n)$ und $s'(n)$, $|R(l)|$, einen Grenzwert T überschreitet. Der Einfluß der Pulsform und des Überabtastens wird im Raum-Frequenz-Bereich aus $X_F$ herausgerechnet, indem

$$\mathrm{F} = diag\left\{R\left(N_c M_c - \frac{M_2 - 1}{2}\right), \ldots, R(N_c M_c - 1), R(0), R(1), \ldots, R\left(\frac{M_2 - 1}{2}\right)\right\}$$

in

$$X_{F'}(i) = X_F(i)F^{-1} \quad (40)$$

eingesetzt wird. In der Zeichnung ist lediglich die Matrix $X_F$ dargestellt. Die Berücksichtigung der Chip-Signalform führt dann zu der Matrix $X_{F'}$. Hiermit haben die Zeilen der Matrix $X_{F'}(i)$ im Raum-Frequenz-Bereich pro Wellenfront eine Invarianz in zeitlicher Richtung (unabhängig von der Pulsform $p_c$ und dem Überabtastfaktor $M_c$). Die P Sequenzen im Raum-Frequenz-Bereich

$$\mathbf{x}_{F'}(i) = vec\{X_{F'}(i)\} 1 \leq i \leq P,$$

werden zusammengefaßt,

$$\mathbf{X}_{F'} = [\mathbf{x}_{F'}(1) \quad \mathbf{x}_{F'}(2) \quad \cdots \quad \mathbf{x}_{F'}(P)],$$

und geglättet

$$\mathbf{X}_{sub} = [\mathbf{J}_{1,1}\mathbf{X}_{F'} \quad \mathbf{J}_{1,2}\mathbf{X}_{F'} \quad \cdots \quad \mathbf{J}_{1,L_2}\mathbf{X}_{F'} \quad \cdots \quad \mathbf{J}_{L_1,L_2}\mathbf{X}_{F'}] \in C^{M_{sub} \times LP} \quad (41)$$

Durch die Glättung werden korrelierte Wellenfronten dekorreliert und die Dimension der Signalkovarianzmatrix

$$R_{xx} = \frac{1}{LP} \cdot X_{sub} X_{sub}^H \in C^{M_{sub} \times M_{sub}} \quad (42)$$

reduziert, d.h. $M_{sub} < M$. Dies führt bei der Eigenwertzerlegung in (43) zu reduziertem Rechenaufwand. Die Rauschkovarianzmatrix $R_{nn}$ kann Off-Line berechnet werden. Auch wenn das am Antennenfeld anliegende Rauschen in räumlicher und zeitlicher Richtung unkorreliert ist, ist das Rauschen im Frequenzbereich oftmals nicht zeitlich unkorreliert. In diesem Fall ist $R_{nn}$ keine skalierte Diagonalmatrix.

**Parameterschätzung**

2-D Unitary ESPRIT unter Berücksichtigung von farbigem Rauschen

Die komplexen Kovarianzmatrizen $R_{xx}$ und $R_{nn}$ werden in reelle Matrizen $G_{xx}$ und $G_{nn}$ transformiert. Eine verallgemeinerte Eigenwertzerlegung

$$\mathbf{G}_{xx}\mathbf{E} = \mathbf{G}_{nn}\mathbf{E} \cdot \Sigma \quad \text{mit} \quad \Sigma = diag\{\sigma_i\}_{i=1}^{M_{sub}}, \quad (43)$$

liefert $E \in C^{M_{sub} \times M_{sub}}$. Die Spalten von $E_s$ bestehen aus dominanten, verallgemeinerten Eigenvektoren, d.h. den Spalten von E, die zu den $K'$ dominanten (größten) verallgemeinerten Eigenwerten $\sigma_k$ gehören. Diese Spalten von $E_s$ spannen den geschätzten Signalunterraum auf, wobei $K'$ die Anzahl der dominanten Wellenfronten bezeichnet. Mit der Unterraumschätzung $E_s$ werden zwei Invarianzgleichungen

$$K_{(r)1} G_{nn} E_s Y_r \approx K_{(r)2} G_{nn} E_s \in R^{m_r \times K'}, \quad r = 1,2, \quad (44)$$

aufgestellt und z.B. mit Hilfe des Verfahrens der kleinsten Quadrate nach $Y_r$ aufgelöst. Die gesuchten räumlichen und zeitlichen Frequenzen

$$\mu_k^{(1)} = \frac{2\pi\Delta}{\lambda} \sin \phi_k, \quad \mu_k^{(2)} = -2\pi \frac{\tau_k}{\tau_{max}} \tag{45}$$

lassen sich durch die komplexe Eigenwertzerlegung

$$Y_1 + jY_2 = T\Lambda T^{-1} \quad \text{mit} \quad \Lambda = diag\{\lambda_k\}_{k=1}^{K'} \tag{46}$$

mit

- $\mu_k^1 = 2\arctan\left(\mathrm{Re}\{\lambda_k\}\right), \qquad 1 \le k \le K'$
- $\mu_k^2 = 2\arctan\left(\mathrm{Im}\{\lambda_k\}\right), \qquad 1 \le k \le K'$ ,

ermitteln. Aus den Frequenzen gemäß Gleichung (45) ergeben sich die gesuchten Einfallswinkel (Azimuth $\phi_k$) und Verzögerungen $\tau_k$ der $K'$ dominanten Wellenfronten.

**Gemeinsame Schätzung der komplexen Amplituden**

Um die komplexen Amplituden zu schätzen, wird die Signalmatrix $S \in C^{K' \times QN_cM_c}$ aus den Verzögerungen $\tau_k$ und die Steuermatrix $A_a \in C^{M_1 \times K'}$ aus den räumlichen Frequenzen $\mu_k^{(1)}$ konstruiert. Die komplexen Amplituden

$$\xi = (B^H R_{NN}^{-1} B)^{-1} B^H R_{NN}^{-1} \cdot vec\{X\} \quad \text{mit } B = S^T \Diamond A_a \tag{47}$$

werden über $Q \le P$ Sequenzen im Raum-Zeit-Bereich geschätzt. $R_{NN}$ ist die geschätzte Rauschkovarianzmatrix im Zeitbereich.

Zusammenfassend lassen sich die Vorteile gegenüber den bekannten Verfahren wie folgt angeben:

Es erfolgt eine Maximierung des Signal/Rauschverhältnisses durch Veränderung der Sende- und Korrelationsequenz, die Pulsform im Raum-Frequenz-Bereich wird berücksichtigt, es ist eine beliebige Wahl der Pulsform und ein beliebiger ganzzahliger Abtastfaktor möglich, eine Eliminierung der schwachen spektralen Linien führt zu einem reduzierten Einfluß des Rauschens und reduziert den Rechenaufwand, eine hochauflösende gemeinsame Schätzung von Azimuth und Verzögerung ist durch Einsatz des 2-D Unitary ESPRIT-Verfahrens und durch Transformation in den Raum-Frequenz-Bereich über Sequenzen möglich, ebenso eine Erweiterung des 2-D Unitary ESPRIT-Verfahrens zur Berücksichtigung des farbigen Rauschens im Raum-Frequenz-Bereich und die gemeinsame Schätzung der Amplituden im Raum-Zeit-Bereich über $Q$ Sequenzen.

**Patentansprüche**

**1.** Verfahren zur Messung der Eigenschaften von Funkkanälen, bei dem

- Empfangssignale von einer Anzahl ($M_1$) von Empfangssensoren (S1-SM) einer linearen Antennengruppe (ULA) empfangen werden, wobei sich die jeweiligen Empfangssignale aus Teilwellen eines Sendesignals unterschiedlicher Einfallsrichtung und unterschiedlicher Verzögerung zusammensetzen,

**dadurch gekennzeichnet, daß**

- das Sendesignal eine vorgewählte Testsequenz enthält,
- die Empfangssignale demoduliert werden und anschließend eine Abtastung erfolgt,
- sich ergebende Abtastwerte bei einer Berechnung von Eigenvektoren, die mit dominanten Eigenwerten korrespondieren, zugeführt werden, wobei aus den berechneten Eigenvektoren eine Signalunterraummatrix abgeleitet wird,
- von der Signalunterraummatrix abhängige Invarianzgleichungen aufgestellt werden,
- Schätzwerte für Einfallswinkel und Verzögerungen von dominanten Wellenfronten durch Lösung der Invarianzgleichungen gleichzeitig ermittelt werden.

**2.** Verfahren nach Anspruch 1,
**dadurch gekennzeichnet, daß** die Testsequenz eine ChipSignalform aufweist, und daß die Schätzwerte unter Berücksichtigung der Chip-Signalform ermittelt werden.

**3.** Verfahren nach Anspruch 2,
**dadurch gekennzeichnet, daß** die Abtastung mit einer Anzahl $M_c$ von Abtastwerten je Chip der Testsequenz erfolgt.

**4.** Verfahren nach einem der Ansprüche 1 bis 3,
**dadurch gekennzeichnet, daß** die Abtastwerte durch diskrete Fouriertransformation in den Frequenzbereich transformiert werden.

**5.** Verfahren nach Anspruch 2 oder 3,
**dadurch gekennzeichnet, daß** die Abtastwerte unter Berücksichtigung des Spektrums der Chip-Signalform der Testsequenz korrigiert werden, wobei die aus den korrigierten Abtastwerten für die Empfangssensoren gebildeten Zeilenvektoren zu einer Datenmatrix ($\boldsymbol{X_F},\boldsymbol{(n)}$) zusammensetzbar sind, welche den Kanal charakterisierende Invarianzen enthält.

**6.** Verfahren nach einem der Ansprüche 1 bis 5,
**dadurch gekennzeichnet, daß** für das Sendesignal eine modulierte Pseudo-Rausch-Sequenz ausgewählt wird.

**7.** Verfahren nach einem der Ansprüche 1 bis 6,
**dadurch gekennzeichnet, daß** die azimuthale Einfallsrichtung ermittelt wird.

**8.** Verfahren nach einem der Ansprüche 1 bis 7,
**dadurch gekennzeichnet, daß** die Empfangssignale der Empfangssensoren (S1-SM) vor dem Demodulieren in das Basisband gemischt werden.

**9.** Verfahren nach einem der Ansprüche 1 bis 8,
**dadurch gekennzeichnet, daß** die Abtastwerte signalangepaßt gefiltert werden.

**10.** Verfahren nach einem der Ansprüche 1 bis 9,
**dadurch gekennzeichnet, daß** die Empfangssignale mit einer Abtastfrequenz abgetastet werden, die größer als die doppelte Empfangssignalbandbreite ist.

**11.** Verfahren nach einem der Ansprüche 1 bis 10,
**dadurch gekennzeichnet, daß** nach Transformation der Abtastwerte in den Frequenzbereich unter einer vorgebbaren Leistungsgrenze liegende Abtastwerte verworfen werden.

**12.** Verfahren nach einem der Ansprüche 3 bis 5,
**dadurch gekennzeichnet, daß** die Abtastwerte nach Transformation in den Frequenzbereich durch Teilung durch das quadratische Spektrum der Chip-Signalform der Testsequenz korrigiert werden.

**13.** Verfahren nach einem der Ansprüche 1 bis 12,
**dadurch gekennzeichnet, daß** die Abtastwerte im Raum-Frequenz-Bereich einer Glättung unterworfen werden.

**14.** Verfahren nach einem der Ansprüche 1 bis 13,
**dadurch gekennzeichnet, daß** die Ermittlung und Zuordnung von sich überlagernden räumlichen und zeitlichen Invarianzen mit Hilfe eines zweidimensionalen, hochauflösenden Frequenzschätzalgorithmus im Raum-Frequenz-Bereich durchgeführt wird.

**15.** Verfahren nach Anspruch 14,
**dadurch gekennzeichnet, daß** in dem zweidimensionalen, hochauflösenden Frequenzschätzalgorithmus das farbige Rauschen im Raum-Frequenz-Bereich berücksichtigt wird.

**16.** Verfahren nach Anspruch 14 oder 15,
**dadurch gekennzeichnet, daß** als Frequenzschätzalgorithmus das 2-D Unitary ESPRIT-Verfahren ausgewählt wird.

**17.** Verfahren nach einem der Ansprüche 1 bis 16,
**dadurch gekennzeichnet, daß** komplexe Amplituden gemeinsam im Raum-Frequenz-Bereich und/oder im Raum-Zeit-Bereich geschätzt werden.

**18.** Verfahren nach Anspruch 17,
**dadurch gekennzeichnet, daß** die gemeinsame Schätzung nach dem Gewichtete-Kleinste-Quadrate-Verfahren durchgeführt wird.

**19.** Meßanordnung zur Messung der Eigenschaften von Funkkanälen mit

- einer lineare Antennengruppe (ULA),
- einer Anzahl ($M_1$) von Empfangssensoren (S1-SM),

wobei einem Empfangssensor

- eine Analog-Digital-Abtastungeinrichtung,
- ein signalangepaßtes Filter sowie
- eine Einrichtung zur diskreten Fouriertransformation nachgeordnet ist und zur Realisierung von Empfangseinrichtungen zumindest ein Signalprozessor vorhanden ist, in dem das Verfahren nach einem der Ansprüche 1 bis 14 angewendet wird.

**Claims**

**1.** Method for measuring characteristics of radio channels, in which

- received signals are received by a total of ($M_1$) receiving sensors (S1-SM) in a linear antenna array (ULA), in which case the respective received signals are composed of wave elements of a transmitted signal with a different incidence direction and different delay,

**characterized in that**

- the transmitted signal contains a preselected test sequence,
- the received signals are demodulated and a sampling process is then carried out,
- resultant samples are supplied for calculation of eigen vectors which correspond to dominant eigen values, with a signal subspace matrix being derived from the calculated eigen vectors,
- invariance equations which are dependent on the signal subspace matrix are produced, and
- estimated values for the incidence angle and delays of dominant wave fronts are determined simultaneously by solving the invariance equations.

**2.** Method according to Claim 1,
**characterized in that** the test sequence has a chip signal form, and **in that** the estimated values are determined taking account of the chip signal form.

**3.** Method according to Claim 2,
**characterized in that** the sampling is carried out with a total of $M_c$ samples per chip in the test sequence.

**4.** Method according to one of Claims 1 to 3,

**characterized in that** the samples are transformed to the frequency domain by discrete Fourier transformation.

**5.** Method according to Claim 2 or 3,
**characterized in that** the samples are corrected taking account of the spectrum of the chip signal form of the test sequence, in which case the line vectors formed from the corrected samples for the receiving sensors can be combined to form a data matrix ($X_{F'}$ ($n$)), which contains invariances which characterize the channel.

**6.** Method according to one of Claims 1 to 5,
**characterized in that** a modulated pseudo-random noise sequence is chosen for the transmitted signal.

**7.** Method according to one of Claims 1 to 6,
**characterized in that** the azimuth incidence direction is determined.

**8.** Method according to one of Claims 1 to 7,
**characterized in that** the signals received by the receiving sensors (S1-SM) are mixed before being demodulated to baseband.

**9.** Method according to one of Claims 1 to 8,
**characterized in that** the samples are filtered, matched to the signal.

**10.** Method according to one of Claims 1 to 9,
**characterized in that** the received signals are sampled at a sampling frequency which is greater than twice the received signal bandwidth.

**11.** Method according to one of Claims 1 to 10,
**characterized in that** once the samples have been transformed to the frequency domain, samples below a power limit which can be predetermined are rejected.

**12.** Method according to one of Claims 3 to 5,
**characterized in that**, once they have been transformed to the frequency domain, the samples are corrected by division by the square of the spectrum of the chip signal form of the test sequence.

**13.** Method according to one of Claims 1 to 12,
**characterized in that** the samples are subjected to smoothing in the space/frequency domain.

**14.** Method according to one of Claims 1 to 13,
**characterized in that** the determination and association of the superimposed, spatial and time invariances are carried out with the aid of a two-dimensional, high-resolution frequency estimation algorithm in the space/frequency domain.

**15.** Method according to Claim 14,
**characterized in that** the coloured noise in the space/frequency domain is taken into account in the three-dimensional, high-resolution frequency estimation algorithm.

**16.** Method according to Claim 14 or 15,
**characterized in that** the 2D Unitary ESPRIT method is selected as the frequency estimation algorithm.

**17.** Method according to one of Claims 1 to 16,
**characterized in that** complex amplitudes are estimated jointly in the space/frequency domain and/or in the space/time domain.

**18.** Method according to Claim 17,
**characterized in that** the joint estimation is carried out using the weighted least squares method.

**19.** Measurement arrangement for measuring the characteristics of radio channels having

- a linear antenna array (ULA),
- a number ($M_1$) of receiving sensors (S1-SM),

in which case a receiving sensor is followed by

- an analog/digital sampling device,
- a matched filter and
- a device for discrete Fourier transformation,

and there is at least one signal processor for the receiving devices, in which signal processor the method according to one of Claims 1 to 14 is used.

## Revendications

1. Procédé pour mesurer les caractéristiques de canaux radio, dans lequel

   - on reçoit des signaux reçus par un certain nombre ($M_1$) de capteurs de réception (S1 à SM) d'un groupe d'antennes linéaire (ULA), les signaux reçus respectifs se composant d'ondes partielles d'un signal émis ayant différentes directions d'incidence et différents retards,

   **caractérisé par le fait que**

   - le signal émis contient une séquence de test présélectionnée,
   - on démodule les signaux reçus et on effectue ensuite un échantillonnage,
   - on envoie des valeurs échantillonnées résultantes lors d'un calcul de vecteurs propres qui correspondent à des valeurs propres dominantes, une matrice de sous-espace de signal étant déduite des vecteurs propres calculés,
   - on pose des équations à invariances dépendantes de la matrice de sous-espace de signal,
   - on détermine simultanément des valeurs estimées pour les angles d'incidence et pour les retards de fronts d'ondes dominants en résolvant les équations à invariances.

2. Procédé selon la revendication 1,
   **caractérisé par le fait que** la séquence de test a une forme de signal à fragments dits chips et qu'on détermine les valeurs estimées en tenant compte de la forme de signal à fragments.

3. Procédé selon la revendication 2,
   **caractérisé par le fait que** l'échantillonnage s'effectue avec un certain nombre ($M_c$) de valeurs échantillonnées par fragment de la séquence de test.

4. Procédé selon l'une des revendications 1 à 3,
   **caractérisé par le fait qu'**on transforme les valeurs échantillonnées par une transformation de Fourier discrète dans le domaine fréquentiel.

5. Procédé selon la revendication 2 ou 3,
   **caractérisé par le fait qu'**on corrige les valeurs échantillonnées en tenant compte du spectre de la forme de signal à fragments de la séquence de test, les vecteurs lignes formés à partir des valeurs échantillonnées corrigées pour les capteurs de réception pouvant être réunis en une matrice de données ($X_F$, (n)) qui contient des invariances caractérisant le canal.

6. Procédé selon l'une des revendications 1 à 5,
   **caractérisé par le fait qu'**on sélectionne pour le signal émis une séquence de pseudobruit modulé.

7. Procédé selon l'une des revendications 1 à 6,
   **caractérisé par le fait qu'**on détermine la direction d'incidence azimutale.

8. Procédé selon l'une des revendications 1 à 7,
   **caractérisé par le fait qu'**on mélange les signaux reçus des capteurs de réception (S1 à SM) avant la démodulation dans la bande de base.

9. Procédé selon l'une des revendications 1 à 8,

**caractérisé par le fait qu'**on filtre les valeurs échantillonnées d'une façon adaptée au signal.

**10.** Procédé selon l'une des revendications 1 à 9,
**caractérisé par le fait qu'**on échantillonne les signaux reçus avec une fréquence d'échantillonnage qui est plus grande que le double de la largeur de bande de signal reçu.

**11.** Procédé selon l'une des revendications 1 à 10,
**caractérisé par le fait que**, après la transformation des valeurs échantillonnées dans le domaine fréquentiel, on rejette des valeurs échantillonnées se trouvant en dessous d'une limite de puissance pouvant être prescrite.

**12.** Procédé selon l'une des revendications 3 à 5,
**caractérisé par le fait qu'**on corrige les valeurs échantillonnées après la transformation dans le domaine fréquentiel par une division par le spectre quadratique de la forme de signal à fragments de la séquence de test.

**13.** Procédé selon l'une des revendications 1 à 12,
**caractérisé par le fait qu'**on soumet les valeurs échantillonnées dans le domaine espace-fréquence à un lissage.

**14.** Procédé selon l'une des revendications 1 à 13,
**caractérisé par le fait qu'**on effectue la détermination et l'association d'invariances spatiales et temporelles se superposant à l'aide d'un algorithme d'estimation de fréquence à deux dimensions et à haute résolution dans le domaine espace-fréquence.

**15.** Procédé selon la revendication 14,
**caractérisé par le fait qu'**on prend en compte dans l'algorithme d'estimation de fréquence à deux dimensions et à haute résolution le bruit coloré dans le domaine espace-fréquence.

**16.** Procédé selon la revendication 14 ou 15,
**caractérisé par le fait qu'**on choisit comme algorithme d'estimation de fréquence le procédé ESPRIT 2-D Unitary.

**17.** Procédé selon l'une des revendications 1 à 16,
**caractérisé par le fait qu'**on estime des amplitudes complexes en commun dans le domaine espace-fréquence et/ou dans le domaine espace-temps.

**18.** Procédé selon la revendication 17,
**caractérisé par le fait qu'**on effectue l'estimation commune selon le procédé des moindres carrés pondérés.

**19.** Dispositif de mesure pour mesurer les caractéristiques de canaux radio, comportant

- un groupe d'antennes linéaire (ULA),
- un certain nombre ($M_1$) de capteurs de réception (S1 à SM),

et dans lequel il est agencé du côté aval d'un capteur de réception

- un dispositif d'échantillonnage analogique-numérique,
- un filtre adapté au signal ainsi que
- un dispositif pour la transformation de Fourier discrète

et il y a pour la réalisation de dispositifs de réception au moins un processeur de signal dans lequel le procédé selon l'une des revendications 1 à 14 est appliqué.

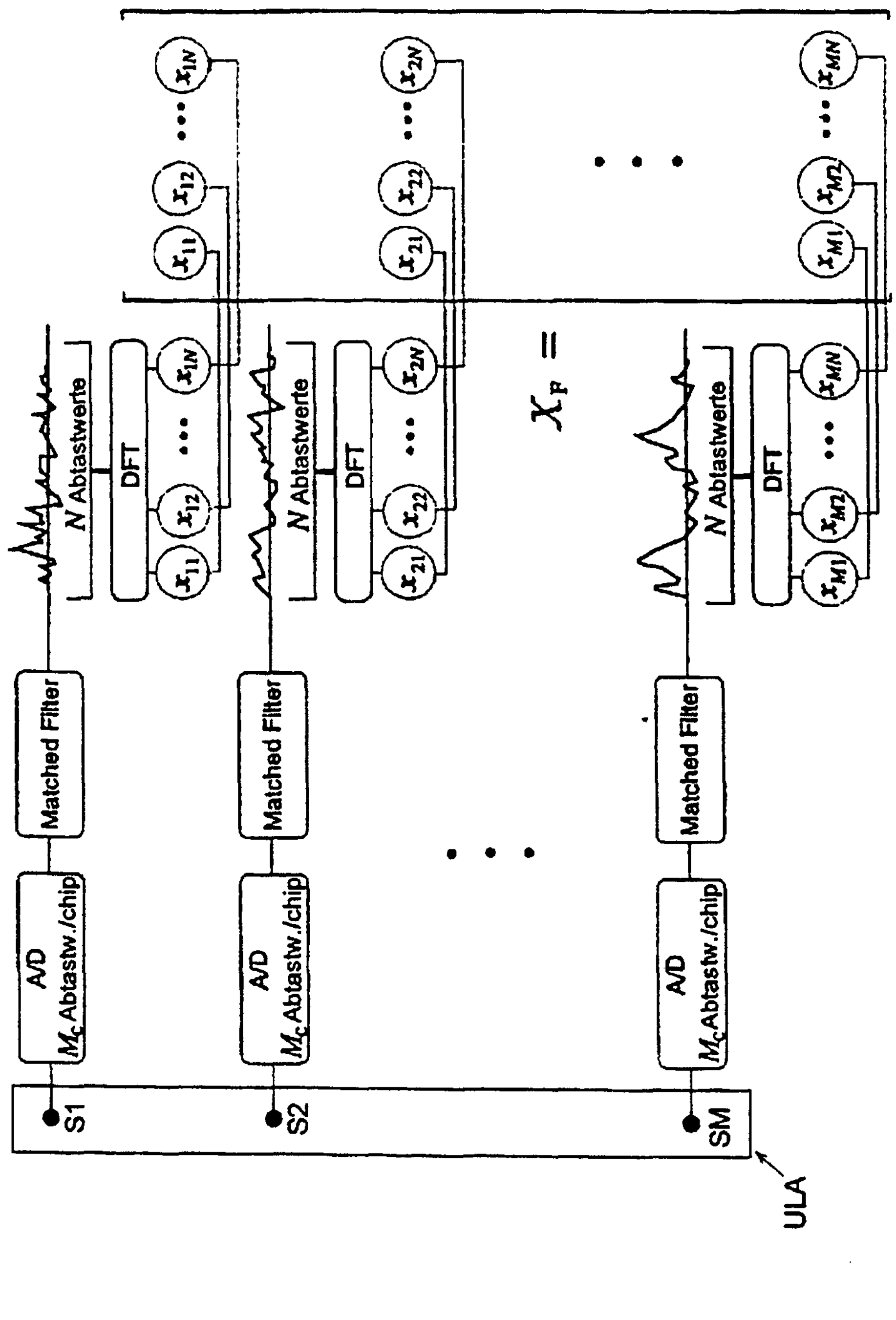

S1
S2
SM
ULA
A/D
$M_c$ Abtastw./chip
Matched Filter
N Abtastwerte
DFT
$x_{11}$ $x_{12}$ ... $x_{1N}$
$x_{21}$ $x_{22}$ ... $x_{2N}$
$x_{M1}$ $x_{M2}$ ... $x_{MN}$
$X_F$ =